# EUROPEAN PATENT SPECIFICATION

(11) **EP 3 693 955 B1**
(45) Date of publication and mention of the grant of the patent: **21.12.2022**
(21) Application number: 18814663.3
(22) Date of filing: 04.10.2018
(51) Int. Cl.: G10D 1/00, G10D 1/08, G10D 3/06, G10D 3/22

(54) **STRING INSTRUMENT FORMED AS AN INTEGRAL UNIT STRUCTURE**
ALS EINSTÜCKIGE EINHEIT GEFORMTES SAITENINSTRUMENT
INSTRUMENT DE MUSIQUE À CORDE CONFIGURÉ SOUS FORME D'UNE STRUCTURE UNITAIRE INTÉGRÉE

(30) Priority: 06.10.2017 ES 201731183
(43) Date of publication of application: 12.08.2020
(73) Proprietor: Planet Ylla, Ramon, 08250 Sant Joan de Vilatorrada (Barcelona) (ES)
(72) Inventor: Planet Ylla, Ramon, 08250 Sant Joan de Vilatorrada (Barcelona) (ES)
(74) Representative: Gallego Jiménez, José Fernando
(86) International application number: PCT/ES2018/070642
(87) International publication number: WO 2019/068953

(56) References cited:
- GB-A- 2 037 049
- US-A- 4 359 923
- US-A1- 2009 126 553
- US-A1- 2013 340 591
- US-A1- 2014 260 887
- US-B1- 6 191 348
- US-B1- 8 324 489
- US-B1- 8 829 318
- Anonymous: "Aluminium Guitar - CNC machined", Immetech Industrial CO., LTD; Junyi Metal & Plastic Mold CO, LTD, 1 January 2007 (2007-01-01), XP055552318, Retrieved from the Internet: URL:http://www.junyimould.com/dispro.asp?i d=17 [retrieved on 2019-02-06]
- DAISHIN SEIKI RYOSUKE OMACHI: "CNC The Machine Cutting Premium Guitar", Youtube, 21 June 2011 (2011-06-21), page 1, XP054979064, Retrieved from the Internet: URL:https://www.youtube.com/watch?v=reBPyJ eyPac [retrieved on 2019-01-22]

## Description

### Field of the invention

The present invention relates generally to stringed musical instruments. The present invention relates more particularly to a stringed instrument manufactured integrally from a solid block of rigid non-wood material, by computer numerical control (CNC), obtaining an instrument that offers advantageous structural features of simplicity and functionality.

### Background

Traditionally, stringed instruments have been constructed from wood, but they have also been made from other materials such as plastics, molded compounds and combinations of such materials. These materials are imperfect and irreplicable for reasons inherent to their organicity and structure. Thus, they are easily deformable by exposure to use, temperature changes, erosion, structural stresses and, consequently, they are unable to offer a correct and permanent stability / reliability and to provide an adequate and equal sound over time or even between products of the same manufacturer and model giving rise to defects and undesirable tonal variations. These disadvantages have led to the use of alternative construction materials, such as metallic materials.

On the other hand, in many conventional stringed instruments, the various components are constructed separately, and then connected to form a finished instrument. Since the tonal quality depends to a large extent on the structural integrity of the instrument, there is inevitably some loss of quality due to the fact that several parts of the instrument, although permanently mounted, are actually separate pieces.

The construction of a unitary guitar formed integrally from metal casting is known from US Pat. No. 4359923. Although it is a unitary metal structure, the pieces made from metal casting, besides resulting in inaccurate instruments, may suffer density variations causing the sine wave that creates the vibration of the strings to be altered and affected by the material through which it is intended to propagate.

In a stringed instrument like a guitar there are certain distances that are derived from Pythagorean scales and highly precise mathematical calculations that need to be replicated perfectly to obtain adequate settings, without which an instrument can never come to provide a correct sound. The advent of CNC machining has allowed for the construction of high precision instruments.

US Pat. No. 6233825 and US Pat. No. 8829318 describe metal guitar bodies manufactured by CNC.

On the other hand, in conventional musical instruments the metal frets of the fretboard are inserted individually into transverse grooves or channels configured on the front side of the fretboard by friction-adjustment or additionally secured by glue. This is a costly operation, which requires a high level of skill and experience on the part of a luthier, becoming a tedious process of trial and error before reaching a satisfactory result. A metal fretboard manufactured integrally and unitary by means of CNC is known from US Pat. No. 8324489.

The fact of being able to have a metal fingerboard manufactured as a unitary piece is a clear advance in the state of the art, although the fingerboard-neck combination is still a limiting aspect since the degree of curvature of the fingerboard is a critical aspect that affects the sound of the instrument and to date it has not been contemplated the possibility of having interchangeable fingerboards with different compound radios for the same instrument.

It is a main object of the present invention to provide a novel and improved construction for a guitar, or a similar stringed instrument formed as an integral unitary structure, having superior sound qualities by improving the sustain of the musical waves through it.

It is another object to provide a high precision electric stringed musical instrument that allows a substantially accurate duplication from instrument to instrument.

It is an additional object to provide a stringed musical instrument that presents a significant reduction in production times.

It is still another object to provide an instrument equipped with a metal fingerboard manufactured by CNC in which all the frets are integrally formed with said fingerboard and which is specifically designed to adapt to said instrument, being easily removable and replaceable by others of different radii, simple or compounds (between its two extremes), and fret positioning, which can also be dispensed with, giving the instrument great versatility. In this way, the possibility of having different fingerboards with different types of curvature allows to obtain different feelings when playing the same instrument.

For all these reasons, the stringed instrument obtained results from very advantageous features with respect to the conventional embodiments of known stringed musical instruments.

### Summary of the invention

In order to achieve the objectives and avoid the drawbacks mentioned in the previous section, the present invention provides a stringed instrument as defined in independent claim 1. The invention contemplates the construction of a stringed musical instrument in which all the main portions, including body, neck and head are formed as an integral unitary structure, of non-wood rigid material, preferably aluminum. The raw material provides unbeatable qualities in relation to the sustain of musical waves through it.

The stringed instrument of the present invention is made by computer numerical control (CNC) from CAD / CAM designs ensuring that the measures necessary for the correct operation of the instrument are calculated with a tolerance of error of the thousandth.

The stringed instrument of the present invention has cavities and / or housings some of which are internally communicated by openings arranged in the side walls of the same forming an interconnected network that allows to control the resonance and sustain within the structure of the body formed integrally. Said interconnected network of cavities and / or housings, added to the unitary structure of the neck and the body, provide a longer sustain creating an effect of "infinite sustain".

Characteristically, the fingerboard and the bridge are also machined in a single metal piece, offering the possibility of having easily interchangeable fingerboard-bridge assemblies and having fingerboards with different radii, simple or compound (between their two ends), and positioning of frets, which can also be dispensed with, for the same stringed instrument. On the other hand, the fingerboard of the present invention is provided with connection means that allow the fingerboard to be connected laterally, providing a front surface of the fingerboard free from unwanted obstacles (for example, screws).

With this invention, periodic revisions by a luthier are not required since the design is based on a structure designed to withstand stresses much higher than those usually exposed to and, its hardness / rigidity / elasticity coefficient, ensures a constant permanence of the necessary measures and set-up fittings between the body of the guitar and the string supports over time and use, ensuring the non-deformation of the instrument itself and therefore the permanence of the initial adjustments.

### Brief description of the drawings

To complement the description that is being made and in order to facilitate the understanding of the characteristics of the invention, a set of drawings in which, with an illustrative and non-limiting character, the following has been represented is attached to the present specification:
- Figure 1 s a front elevation view of an embodiment of the unitary structure of the invention.
- Figure 2 shows a cross-sectional view of Figure 1.
- Figure 3 shows a front elevation view of another embodiment of the unitary structure of the invention.
- Figure 4 shows a rear elevation view of an embodiment of the unitary structure of the invention.
- Figure 5 shows a front elevation view of an embodiment of the invention.
- Figure 6 shows a front elevation view of an embodiment of the fingerboard.
- Figure 7 shows a front elevation view of another embodiment of the fingerboard.
- Figure 8 shows a profile view of an embodiment of the invention.
- Figure 9 shows a rear elevation view of an embodiment of the invention.

### Detailed description of some embodiments of the invention

For descriptive purposes, the invention relates to the construction of an electric guitar, without this limiting the scope of the invention, since it can be applied to any stringed musical instrument.

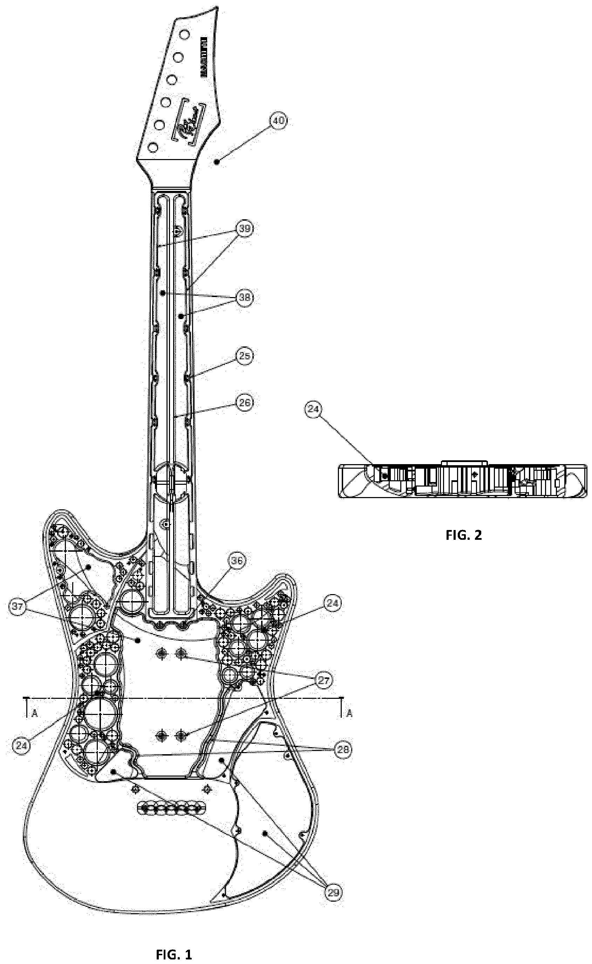

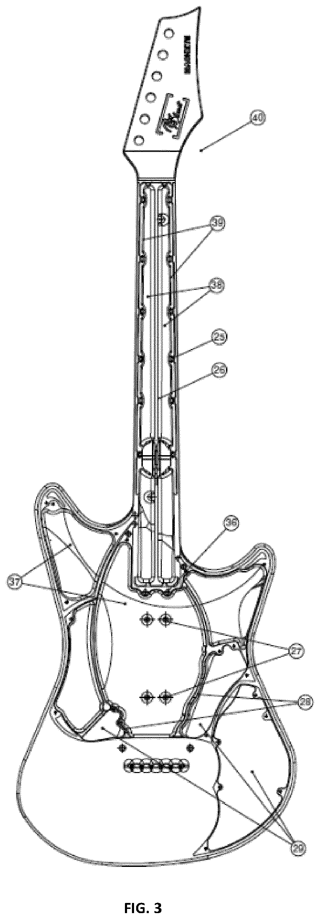

As shown in Figures 1, 3 and 4, the unitary structure (40) incorporates all the basic elements of a guitar or similar instrument; including body (15), neck (41) and head (17), minus the strings, the tuning pegs, the fingerboard, the bridge and any desired electronic means.

The body (15) of the guitar preferably comprises a distinctive pattern of cavities (24) and / or housings (37) in its front part (43) placed in predetermined locations and intervals and open chambers (29) extending between said front part and the rear part (42). This preferred arrangement reduces the total body weight while maintaining the required structural strength.

At least some of said cavities (24) and / or housings (37) are communicated internally by openings arranged in the side walls thereof forming an interconnected network that allows to control the resonance and sustain within the structure of the integrally formed body. The open chambers (29) are delimited by at least some internal ribs (28).

The body (15) further comprises projections (27) in one of the housings (37) for the mounting of pickups (5).

The neck (41) is formed as an open frame including hollow cavities in its front part delimited by a side wall (39), a bottom wall (38) and a central rib (26). It is contemplated that said cavities may accommodate optical fibers or resins connected to light emitting diodes (LEDs), visible through one or more light ports (3,47) located on the front of the fingerboard (2).

The neck is provided with fixing means (25, 36) for fixing the fingerboard (2).

The head (17) is provided with holes (44) for mounting tuners (19) with their corresponding pegs.

Additionally, it is contemplated that the optical fibers or resins extend to a housing (34) located on the back of the head (41), which in turn serves to reduce the weight of the instrument, and are visible through a light port (1) located on the front thereon. The housing (34) is sealed by a back cover (18).

In another embodiment, it is contemplated that the front part (43) of the instrument includes a touch screen.

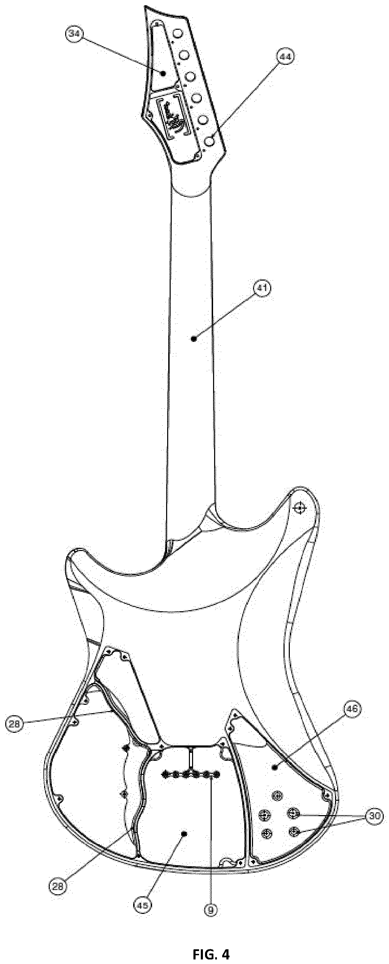

Figure 4 shows the back of the guitar including a housing (45) for housing the structure of a tail piece (9), the latter included integrally in said body (15), and a housing (46) equipped with supports (30) that are an integral part of the unitary structure and are intended to support a power source.

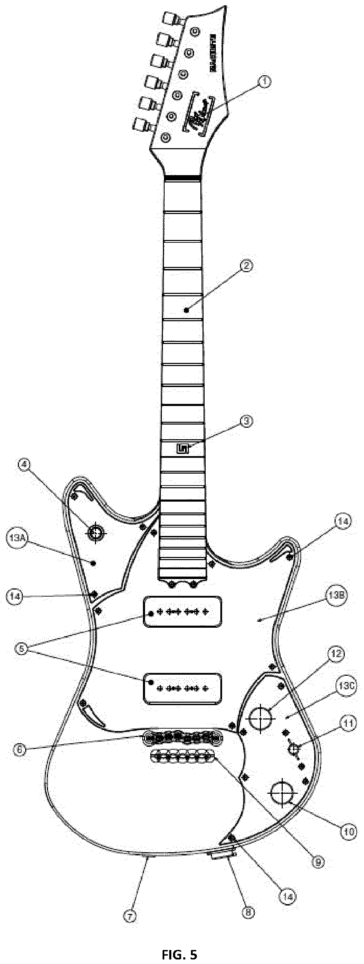

Figure 5 shows the unitary structure (40) with front panels (13A, 13B, 13C) that frontally seal the body (15) and are connected to said body through connection means (14). The front part (43) includes a bridge (6) also manufactured by CNC, preferably in aluminum, pickups (5) mounted on one of the front panels (13B) and supported by the projections (27) and electronic means (10, 11 and 12) mounted on one of the front panels (13C).

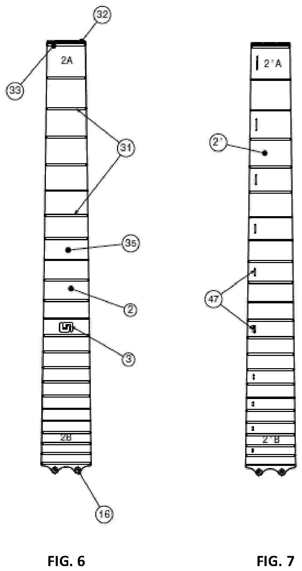

Figures 6 and 7 show a front view of two embodiments of the fingerboard (2, 2'). Said fingerboard includes a front surface (35) with a compound radius (2A-2B, 2'A-2'B) that offers infinite possible combinations, an associated set of frets (31) integrally configured with said front surface and comprising a zero-fret (33) and a zero-fret guide (32). Additionally, the fingerboard (2, 2') is provided with connection means (16, 25) for the removable connection of the fingerboard to the neck (41).

In an alternative embodiment, it is contemplated that the fingerboard-neck connection be made by magnet-type connection means.

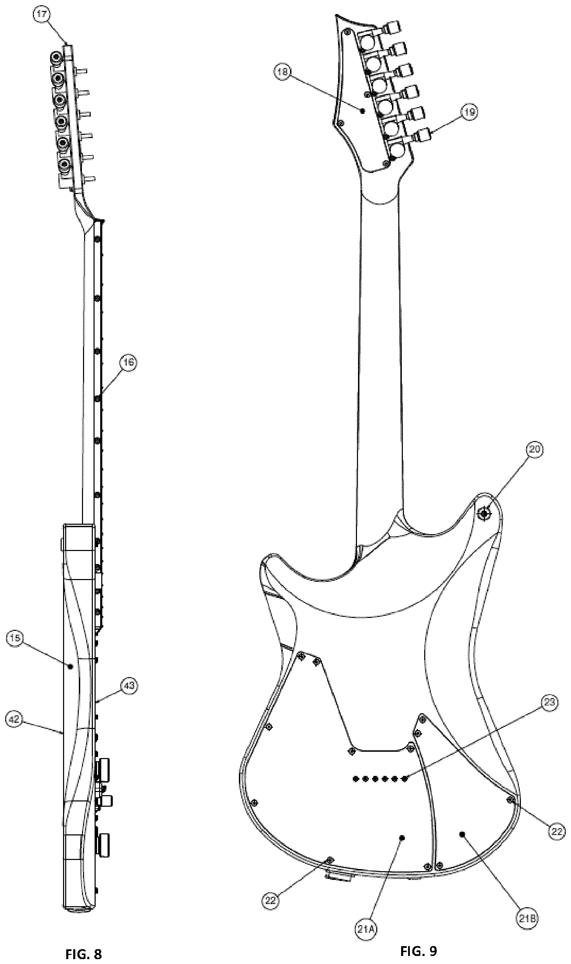

Figure 9 shows a rear view of the instrument with rear panels (21A, 21B) which subsequently seal the body (15) and are connected to said body through connection means (22).

In an alternative embodiment, it is contemplated that the connection means (14, 22) of the front and / or rear panels is made by magnet-type connection means.

The structure formed integrally is produced from a solid block of non-wood material by computer numerical control (CNC) that allows the production of structures of high precision and quality.

The fingerboard is manufactured with the frets mechanized under CNC integrally with the rest of the structure of the fingerboard from a single block of rigid material, preferably aluminum.

Once the nature of the invention has been sufficiently described, as well as some examples of preferred embodiments, it is stated for the appropriate purposes that the materials, form, and size of the elements described may be modified, insofar as these modifications fall within the scope of the present invention as defined by the appended claims.

## Claims

1. Stringed instrument comprising:
- a unitary structure (40) formed integrally by a body (15), a neck (41) and a head (17);
- front panels (13A, 13B, 13C) that seal the body (15) at the front and are connected to said body through connection means (14);
- rear panels (21A, 21B) that seal the body (15) at the back and are connected to said body through connection means (22),
wherein said head (17) has holes (44) for mounting tuners (19) with corresponding pegs,
**characterized in that**
said unitary structure (40) is formed from a solid block of rigid non-wood material by computer numerical control (CNC) machining;
said body (15) comprises: a front part (43) with a plurality of cavities (24) and / or housings (37) arranged at predetermined locations and intervals and at least some of said cavities (24) and / or housings (37) communicated internally by openings arranged in the side walls thereof to form an interconnected network;
and a rear part (42) with housings (45, 46) for the housing of the structure of a tail piece (9) that is integrally comprised in said unitary structure (40) and of a power source respectively, and open chambers (29) that extend between said front part and said rear part and are delimited by at least some internal ribs (28);
said neck (41) comprises a side wall (39) provided with fixing means (25) for fixing a fingerboard (2, 2'), a bottom wall (38) and a central rib (26);
said stringed instrument additionally comprises a metal fingerboard (2,2') with a compound radius, machined by CNC from a solid block of rigid non-wood material as a single piece and connected to said unitary structure (40) in a removable and interchangeable manner, through connection means (16) arranged on the lateral walls of the fingerboard (2, 2') that allow the fingerboard to be connected laterally and are complementary with the fixing means (25) arranged on the neck (41); and
said stringed instrument additionally comprises a bridge (6) machined by CNC from a solid block of non-wood rigid material and mounted on the front part (43) of the body (15).

2. Stringed instrument according to claim 1 wherein the rigid non-wood material is aluminum.

3. Stringed instrument according to previous claims **characterized in that** the stringed instrument further comprises a plurality of tensioned strings extending between a position anchored in said head (17) and the tail piece (9).

4. Stringed instrument according to previous claims **characterized in that** the stringed instrument further comprises electronic means (10, 11 and 12) mounted on one of said front panels (13C).

5. Stringed instrument according to claim 1, wherein the rigid non-wood material of the bridge (6) is aluminum.

6. Stringed instrument according to previous claims, **characterized in that** the stringed instrument further comprises a plurality of pickups (5) mounted on one of said front panels (12B) and / or connected to the unitary structure (40) through projections (27).

7. Stringed instrument according to previous claims **characterized in that** the stringed instrument further comprises a touch screen on the front part (43) of the body (15).

8. Stringed instrument according to previous claims **characterized in that** the stringed instrument further comprises a lighting element housed in hollow cavities of the neck (41) and the head (17) and visible through light ports (1, 3, 47).

9. Stringed instrument according to claim 8, wherein the lighting element is a plurality of optical fibers or resins connected to light emitting diodes.

10. Stringed instrument according to previous claim 1, wherein the fingerboard (2, 2') comprises:
- a front surface (35) with a compound radius (2A-2B, 2'A-2'B) having multiple possible combinations within a compound radius of 12,7 cm to 76,2 cm;
- an associated set of frets (31) integrally configured with said front surface, said set of frets comprising a zero-fret (33); and
- a zero-fret guide (32).

11. Stringed instrument according to claim 1, wherein the fingerboard (2,2') comprises an unfretted front surface (35).

12. Stringed instrument according to claim 1, wherein the rigid non-wood material of the fingerboard (2,2') is aluminum.

13. Stringed instrument according to claim 1, wherein the connection means (25, 16) are of the magnet-type.

## Patentansprüche

1. Saiteninstrument, umfassend:
- eine unitäre Struktur (40), die einstückig von einem Körper (15), einem Hals (41) und einem Kopf (17) gebildet ist;
- Frontplatten (13A, 13B, 13C), die den Körper (15) an der Vorderseite abdichten und mit dem Körper durch Verbindungsmittel (14) verbunden sind;
- Rückwände (21A, 21B) , die den Körper (15) auf der Rückseite abdichten und mit dem Körper durch Verbindungsmittel (22) verbunden sind,
wobei der Kopf (17) Löcher (44) zum Montieren von Stimmgeräten (19) mit entsprechenden Wirbeln aufweist,
**dadurch gekennzeichnet, dass**
die unitäre Struktur (40) aus einem massiven Block aus starrem, nicht hölzernem Material durch CNC-Bearbeitung (Computer Numerical Control) gebildet ist;
der Körper (15) umfasst: einen vorderen Teil (43) mit einer Vielzahl von Hohlräumen (24) und/oder Aufnahmen (37), die an vorbestimmten Stellen und in bestimmten Abständen eingerichtet sind, und mindestens einige der Hohlräume (24) und/oder Aufnahmen (37), die intern durch Öffnungen, die in den Seitenwänden davon eingerichtet sind, in Verbindung stehen, um ein zusammenhängendes Netzwerk zu bilden;
und einen hinteren Teil (42) mit Aufnahmen (45, 46) für das Aufnehmen jeweils der Struktur eines Endstücks (9), das einstückig in der unitären Struktur (40) enthalten ist, und einer Energiequelle, und offenen Kammern (29), die sich zwischen dem vorderen Teil und dem hinteren Teil erstrecken und von mindestens einigen inneren Rippen (28) begrenzt sind;
der Hals (41) eine Seitenwand (39), die mit Befestigungsmitteln (25) zum Befestigen eines Griffbretts (2, 2') versehen ist, eine Bodenwand (38) und eine Mittelrippe (26) umfasst;
das Saiteninstrument zusätzlich ein Metallgriffbrett (2, 2') mit einem zusammengesetzten Radius umfasst, das durch CNC aus einem massiven Block aus starrem, nicht hölzernem Material als ein einziges Stück gearbeitet und mit der unitären Struktur (40) entfernbar und austauschbar durch Verbindungsmittel (16) verbunden ist, die an den Seitenwänden des Griffbretts (2, 2') eingerichtet sind, die es dem Griffbrett erlauben, seitlich verbunden zu sein, und die zu den Befestigungsmitteln (25), die auf dem Hals (41) eingerichtet sind, komplementär sind; und
das Saiteninstrument zusätzlich einen Steg (6) umfasst, der aus einem massiven Block aus starrem, nicht hölzernem Material CNC-gearbeitet ist und auf dem vorderen Teil (43) des Körpers (15) montiert ist.

2. Saiteninstrument nach Anspruch 1, wobei das starre, nicht hölzerne Material Aluminium ist.

3. Saiteninstrument nach vorstehenden Ansprüchen, **dadurch gekennzeichnet, dass** das Saiteninstrument ferner eine Vielzahl gespannter Saiten umfasst, die sich zwischen einer Position, die in dem Kopf (17) verankert ist, und dem Endstück (9) erstrecken.

4. Saiteninstrument nach vorstehenden Ansprüchen, **dadurch gekennzeichnet, dass** das Saiteninstrument ferner elektronische Mittel (10, 11 und 12) umfasst, die auf einer der Frontplatten (13C) montiert sind.

5. Saiteninstrument nach Anspruch 1, wobei das starre, nicht hölzerne Material des Stegs (6) Aluminium ist.

6. Saiteninstrument nach vorstehenden Ansprüchen, **dadurch gekennzeichnet, dass** das Saiteninstrument ferner eine Vielzahl von Tonabnehmern (5) umfasst, die an einer der Frontplatten (12B) montiert und/oder mit der unitären Struktur (40) durch Vorsprünge (27) verbunden sind.

7. Saiteninstrument nach vorstehenden Ansprüchen, **dadurch gekennzeichnet, dass** das Saiteninstrument ferner einen Berührungsbildschirm auf dem Vorderteil (43) des Körpers (15) umfasst.

8. Saiteninstrument nach vorstehenden Ansprüchen, **dadurch gekennzeichnet, dass** das Saiteninstrument ferner ein Beleuchtungselement umfasst, das in hohlen Hohlräumen des Halses (41) und des Kopfes (17) aufgenommen und durch Lichtöffnungen (1, 3, 47) sichtbar ist.

9. Saiteninstrument nach Anspruch 8, wobei das Beleuchtungselement eine Vielzahl optischer Fasern oder Harze ist, die mit Licht emittierenden Dioden verbunden sind.

10. Saiteninstrument nach Anspruch 1, wobei das Griffbrett (2, 2') umfasst:
- eine Vorderoberfläche (35) mit einem zusammengesetzten Radius (2A-2B, 2'A-2'B), der mehrere mögliche Kombinationen innerhalb eines zusammengesetzten Radius von 12,7 cm bis 76,2 cm aufweist;
- eine assoziierte Gruppe von Bünden (31), die integral mit der Vorderoberfläche konfiguriert ist, wobei die Gruppe von Bünden einen Null-Bund (33) umfasst; und
- eine Nullbundführung (32).

11. Saiteninstrument nach Anspruch 1, wobei das Griffbrett (2, 2') eine bundlose Vorderoberfläche (35) umfasst.

12. Saiteninstrument nach Anspruch 1, wobei das starre, nicht hölzerne Material des Griffbretts (2, 2') Aluminium ist.

13. Saiteninstrument nach Anspruch 1, wobei die Verbindungsmittel (25, 16) vom Magnettyp sind.

## Revendications

1. Instrument à cordes comprenant :
- une structure unitaire (40) formée d'un seul tenant par un corps (15), un manche (41) et une tête (17) ;
- des panneaux avant (13A, 13B, 13C) qui scellent le corps (15) à l'avant et sont connectés audit corps à travers des moyens de connexion (14) ;
- des panneaux arrière (21A, 21B) qui scellent le corps (15) au dos et sont connectés audit corps à travers des moyens de connexion (22),
dans lequel ladite tête (17) a des trous (44) pour le montage d'accordeurs (19) avec des chevilles correspondantes,
**caractérisé en ce que**
ladite structure unitaire (40) est formée à partir d'un bloc solide de matériau non ligneux rigide par usinage à commande numérique par ordinateur (CNC) ;
ledit corps (15) comprend : une partie avant (43) avec une pluralité de cavités (24) et / ou de logements (37) agencés à des emplacements et intervalles prédéterminés et au moins certains desdits cavités (24) et / ou logements (37) communiqués en interne par des ouvertures agencées dans les parois latérales de celui-ci pour former un réseau interconnecté ;
et une partie arrière (42) avec des logements (45, 46) pour le logement de la structure d'un cordier (9) qui est compris d'un seul tenant dans ladite structure unitaire (40) et d'une source d'alimentation respectivement, et des chambres ouvertes (29) qui s'étendent entre ladite partie avant et ladite partie arrière et sont délimitées par au moins quelques nervures internes (28) ;
ledit manche (41) comprend une paroi latérale (39) pourvue de moyens de fixation (25) pour la fixation d'une touche (2, 2'), une paroi de fond (38) et une nervure centrale (26) ;
ledit instrument à cordes comprend en outre une touche métallique (2, 2') avec un rayon composé, usinée par CNC à partir d'un bloc solide de matériau non ligneux rigide comme une seule pièce et connectée à ladite structure unitaire (40) d'une manière amovible et interchangeable, à travers des moyens de connexion (16) agencés sur les parois latérales de la touche (2, 2') qui permettent à la touche d'être connectée latéralement et sont complémentaires avec les moyens de fixation (25) agencés sur le manche (41) ; et
ledit instrument à cordes comprend en outre un chevalet (6) usiné par CNC à partir d'un bloc solide de matériau non ligneux rigide et monté sur la partie avant (43) du corps (15).

2. Instrument à cordes selon la revendication 1 dans lequel le matériau non ligneux rigide est de l'aluminium.

3. Instrument à cordes selon les revendications précédentes **caractérisé en ce que** l'instrument à cordes comprend en outre une pluralité de cordes tendues s'étendant entre une position ancrée dans ladite tête (17) et le cordier (9).

4. Instrument à cordes selon les revendications précédentes **caractérisé en ce que** l'instrument à cordes comprend en outre des moyens électroniques (10, 11 et 12) montés sur l'un desdits panneaux avant (13C).

5. Instrument à cordes selon la revendication 1, dans lequel le matériau non ligneux rigide du chevalet (6) est de l'aluminium.

6. Instrument à cordes selon les revendications précédentes, **caractérisé en ce que** l'instrument à cordes comprend en outre une pluralité de micros (5) montés sur l'un desdits panneaux avant (12B) et / ou connectés à la structure unitaire (40) à travers des saillies (27).

7. Instrument à cordes selon les revendications précédentes **caractérisé en ce que** l'instrument à cordes comprend en outre un écran tactile sur la partie avant (43) du corps (15).

8. Instrument à cordes selon les revendications précédentes **caractérisé en ce que** l'instrument à cordes comprend en outre un élément illuminant logé dans des cavités creuses du manche (41) et de la tête (17) et visible à travers des ports lumineux (1, 3, 47).

9. Instrument à cordes selon la revendication 8, dans lequel l'élément illuminant est une pluralité de fibres optiques ou de résines connectées à des diodes électroluminescentes.

10. Instrument à cordes selon la revendication précédente 1, dans lequel la touche (2, 2') comprend :
- une surface avant (35) avec un rayon composé (2A-2B, 2'A-2'B) ayant de multiples combinaisons possibles à l'intérieur d'un rayon composé de 12,7 cm à 76,2 cm ;
- un ensemble associé de frettes (31) configurées d'un seul tenant avec ladite surface avant, ledit ensemble de frettes comprenant une frette zéro (33) ; et
- un guide de frette zéro (32).

11. Instrument à cordes selon la revendication 1, dans lequel la touche (2, 2') comprend une surface avant non frettée (35).

12. Instrument à cordes selon la revendication 1, dans lequel le matériau non ligneux rigide de la touche (2, 2') est de l'aluminium.

13. Instrument à cordes selon la revendication 1, dans lequel les moyens de connexion (25, 16) sont du type aimant.
